# EUROPEAN PATENT APPLICATION

(11) **EP 4 015 224 A1**
(43) Date of publication of application: **22.06.2022**
(21) Application number: 20215645.1
(22) Date of filing: 18.12.2020
(51) Int. Cl.: B41J 3/60, B41J 13/00, G03G 15/00, G06F 3/12

(54) **METHOD FOR OPERATING A PRINTER, PRINTER CONTROLLER, AND PRINTER**

(71) Applicant: Canon Production Printing Holding B.V., 5914 HH Venlo (NL)
(72) Inventor: CURRAN, Joshua D., 5914 HH Venlo (NL); GERRITS, Antonius M., 5914 HH Venlo (NL)
(74) Representative: Canon Production Printing IP Department

(57) **Abstract**

The invention provides a method for operating a printer. The printer comprises a plurality of input devices for providing print media, a print engine for disposing marking material on the print media, and a plurality of output devices for holding the print media after the marking material has been disposed on the print media. One or more simplex print jobs are provided which are distributed to a plurality of different printing configurations. Each printing configuration comprises at least one of the input devices, the print engine, and at least one of the output devices. The printer prints the simplex print jobs using the plurality of printing configurations in an interwoven way.

## Description

### FIELD OF THE INVENTION

The present invention relates to a method for operating a printer. The invention further relates to a printer controller for a printer, and to a printer.

### BACKGROUND ART

Printers typically comprise one or more input devices (e.g. paper input modules, PIM) which supply and provide the print media, a print engine that is carrying out the actual printing process, and one or more output devices (e.g. high capacity stackers, HCS) for processing and holding the media after the printing process.

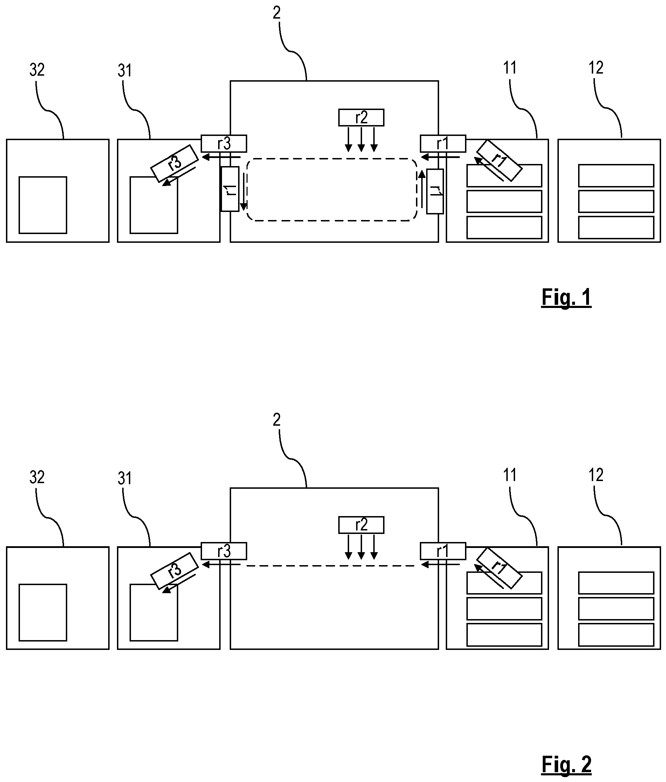

The overall productivity of a printer depends on the slowest component of the printer. An exemplary known printer is illustrated in figures 1 and 2. The printer comprises two paper input modules 11, 12, a print engine 2 and two stackers 31, 32. For example, each paper input module 11, 12 may provide sheets at a maximum rate r1 of 100 sheets per minute (spm).

In a duplex mode, illustrated in figure 1, the print engine 2 applies images at rate r2 of 200 images per minute (ipm) corresponding to the sum of the rate r1 of print media newly provided by a paper input module 11, 12 and the rate r1 of print media provided by the duplex unit of the print engine 2. The stacker 31, 32 stacks sheets at a maximum rate r3 of 100 sheets per minute. Accordingly, such a printer has a total rate of 200 ipm and 100 spm in the duplex mode.

In a simplex mode, illustrated in figure 2, the rate r2 of the printer drops to 100 ipm corresponding to the rate r1 of print media newly provided by the paper input module 11, 12. Accordingly, such a printer has a total rate of 100 ipm and 100 spm in the simplex mode.

In other words, the simplex rate of the print engine (which is generally the expensive part) is limited by the rate of the input devices and the rate of the output devices (which are generally the cheaper parts).

It is further known to use virtual printers. EP 3376362 A1 discloses virtual printers with disjunct groups of input and output trays. Users are assigned to these virtual printers, allowing them only to print from and to the associated groups of input and output trays. Thus, access to different media types can be restricted based on the user.

Moreover, it is known to use virtual printers in relation to load balancing. For example, a single virtual printer may execute submitted print jobs on multiple physical printers. US 2008/0180725 A1 relates to generating user-defined printer cluster groups for the automatic distribution of documents for printing. US 2006/0050294 A1 relates to print job management systems for shared printers on a computer network.

US 10 261 736 B2 relates to ordering jobs in a print queue based on preparation and print times. JP 2011/057409A relates to a control approach for optimizing the productivity of simplex and duplex jobs. US 2005/057767 A1 relates to a printing control method for creating jobs to be sent to two like printing engines.

To obtain higher rates of more sheets per minute, multiple printers may be used. However, this implies a multiplication of costs and requires additional work to schedule the multiple machines and to divide print jobs in some way between the multiple printers to make efficient use of all printers.

Another approach is to only accept duplex jobs, i.e. disallow simplex jobs. However, this may seem rather restrictive and unwanted from a practical point of view.

### SUMMARY OF THE INVENTION

It is one of the objects of the present invention to provide a printer capable of both simplex and duplex printing which is better adapted to use the full capacity of the print engine of the printer, even in a simplex mode.

This object is achieved by a method for operating a printer, a computer program product, a non-transitory, computer-readable storage medium, a printer controller, and a printer as recited in the independent claims.

Further variants and additional modifications will be apparent from the subject-matter of the dependent claims as well as from the description and the corresponding figures.

According to a first aspect, the invention provides a method for operating a printer. The printer comprises a plurality of input devices for providing print media (such as paper), a print engine for disposing marking material (such as ink) on the print media, and a plurality of output devices for holding the print media after the marking material has been disposed on the print media. One or more simplex print jobs are provided which are distributed to a plurality of different printing configurations. Each printing configuration comprises at least one of the input devices, the print engine, and at least one of the output devices. The printer prints the simplex print jobs using the plurality of printing configurations in an interwoven way.

According to a second aspect, the invention provides a computer program product comprising executable program code configured to, when executed by a computing device, perform the inventive method for operating the printer.

According to a third aspect, the invention provides a non-transitory, computer-readable storage medium comprising executable program code configured to, when executed by a computing device, perform the inventive method for operating the printer.

According to a fourth aspect, the invention provides a printer controller for controlling a printer. The printer comprises a plurality of input devices for providing print media, a print engine for disposing marking material on the print media, and a plurality of output devices for holding the print media after the marking material has been disposed on the print media. The printer controller receives one or more simplex print jobs distributed to a plurality of different printing configurations. Each printing configuration comprises at least one of the input devices, the print engine, and at least one of the output devices. The printer controller controls the printer to print the simplex print jobs using the plurality of printing configurations in an interwoven way.

According to the fifth aspect, the invention provides a printer comprising a plurality of input devices for providing print media, a print engine for disposing marking material on the print media, a plurality of output devices for holding the print media after the marking material has been disposed on the print media, and a printer controller for controlling the printer according to the invention.

An underlying idea of the present invention is to make use of the extra rate (or speed) available in the print engine by using several input devices and/or several output devices in parallel. Therefore, the print engine may print at an essentially maximal rate. The overall speed of the printer for simplex jobs increases significantly.

From the user's perspective, the printer may behave like multiple (virtual) printers. However, it is not necessary to actually acquire multiple printers. Therefore, costs can be significantly reduced. Moreover, all print jobs are located at one location instead of two locations, so the user has to walk less, and the required floor space is smaller. Moreover, the user only needs to invest in one print engine.

Further, the invention can use the maximum capacity both during duplex printing and simplex printing. Therefore, the resource utilization in the printer is optimized when the print engine has a significantly higher processing speed than either the input or output devices.

In general, the simplex speed of the printer may be identical to the duplex speed. However, due to inefficiencies resulting from the structure of the jobs that must stay within a single input or output (a single printing configuration), the experienced productivity may be somewhat smaller, i.e. the simplex speed may be somewhat smaller than the duplex speed.

According to the invention, two "printing configurations are different" if at least one of the input device(s) or output device(s) associated with one of the printing configurations is not associated with the other printing configuration.

According to the invention, a "printing configuration" may correspond to a virtual printer.

According to the invention, printing "using a printing configuration" may refer to providing print media by the at least one input device associated with the printing configuration, disposing marking material on the print media by the print engine, optionally putting through the print media, and holding the print media using the at least one output device associated with the printing configuration.

According to the invention, printing in an "interwoven way" may refer to the parallel (i.e. concurrent) usage of different input devices and/or different output devices. That is, different input devices (corresponding to different printing configurations) may provide print media in an alternating way. Alternatively or additionally, different output devices (corresponding to different printing configurations) may stack the print media in an alternating way. For example, different input devices may have the same rate (in sheets per minute). After one of the input devices provides print media, another of the input devices provides print media. As a further example, different output devices may have the same rate (in sheets per minute). After one of the output devices stacks print media, another of the output devices stacks print media.

According to the invention, the printer "prints the simplex jobs" refers to a printing process on only a single side of the print media, i.e. single-sided printing.

If a greater number of input devices is used, the capacity (walk-away time) and the variability (e.g. different media in different input devices) can increase.

If a greater number of output devices is used, the capacity (walk-away time) can increase, and the printer may keep running while one of the output devices is ejecting a stack or is full.

In some advantageous embodiments, the print engine disposes marking material on the print media at a rate (in images per minute) that is larger than a rate (in sheets per minute) provided by each input device of the plurality of input devices. For instance, the print engine may have a maximum rate of 200 ipm. Each of the input devices (e.g. paper input modules) may have a maximum rate of 100 spm. By using two input devices in an interwoven way, the input devices together can supply print media at a maximum rate of 200 ipm, matching the maximum rate of the print engine.

In some advantageous embodiments, the print engine disposes marking material on the print media at a rate (in images per minute) that is larger than a rate (in sheets per minute) provided by each output device of the plurality of output devices. Again, the print engine may have a maximum rate of 200 ipm. Each of the output devices (e.g. high capacity stacker, HCS) may have a maximum rate of 100 spm. By using two output devices in an interwoven way, the output devices together can stack print media at a maximum rate of 200 spm, matching the maximum rate of the print engine.

By combining two (or more) input or output devices to feed sheets to respectively convey sheets away from the print engine, the print engine can be operated at or close to its full operating speed, even when the input or output devices have a lower operating speed. Therefore, the lower rated input or output devices may not be shared between multiple printing configurations.

In some advantageous embodiments, the print engine disposes marking material on the print media at a rate (in images per minute) provided by the print engine which corresponds essentially (or exactly) to a combined rate (in sheets per minute) provided by the plurality of input devices. For instance, two printing configurations may be used, wherein the printing configurations involve different input devices. Two input devices corresponding to the printing configurations may each have the same rate (in sheets per minute) which is essentially (or exactly) half the rate (in images per minute) of the print engine. In general, n printing configurations may be used, wherein the printing configurations involve different input devices, and with *n* a natural number. Each input device corresponding to a printing configuration may have the same rate (in sheets per minute) which is essentially (or exactly) 1/n times the rate (in images per minute) of the print engine.

In some advantageous embodiments, the print engine disposes marking material on the print media at a rate (in images per minute) provided by the print engine which corresponds essentially (or exactly) to a combined rate (in sheets per minute) provided by the plurality of output devices. For instance, two printing configurations may be used, wherein the printing configurations involve different output devices. Two output devices corresponding to the printing configurations may each have the same rate (in sheets per minute) which is essentially (or exactly) half the rate (in images per minute) of the print engine. In general, *n* printing configurations may be used, wherein the printing configurations involve different output devices, and with *n* a natural number. Each output device corresponding to a printing configuration may have the same rate (in sheets per minute) which is essentially (or exactly) 1/*n* times the rate (in images per minute) of the print engine.

In some advantageous embodiments, the printer comprises a paper input module (PIM) with a plurality of drawers. Each drawer corresponds to a separate input device.

In some advantageous embodiments, the printer comprises a plurality of paper input modules. Each paper input module of the plurality of paper input modules corresponds to at least one input device. Each paper input module may have one or more drawers to take media from.

In some advantageous embodiments, a simplex print job is automatically distributed to the plurality of printing configurations, based on a distribution algorithm. For example, different input devices may provide different types of print media, e.g. papers of different sizes or qualities or pre-printed paper. For each type of print media, at least one printing configuration may be defined. A simplex job may comprise different parts which require different types of print media. In this case, the parts of the simplex print job may be automatically assigned to the corresponding printing configurations.

In some advantageous embodiments, a simplex print job may contain a plurality of sub-jobs (such as separate books, booklets, chapters or the like). For example, the user may provide a plurality of print sub-jobs. The distribution algorithm distributes the print (sub-)jobs to the printing configurations. Further, information may be generated which informs the user how the print sub-jobs have been processed. For example, the user may be informed which of the output devices hold the print media corresponding to each print (sub-)job.

In some advantageous embodiments, the distribution algorithm distributes a simplex print job (which may comprise a plurality of sub-jobs) to the plurality of printing configurations in an essentially (or exactly) even way. That is, each printing configuration may process the essentially (or exactly) same amount of print media. In this way, the overall processing speed may be optimized.

In some advantageous embodiments, a user may carry out the distribution of the simplex print job to the plurality of printing configurations. For example, the user may associate sub-jobs of the simplex print job with different printing configurations.

In case a user manually distributes the simplex print jobs to the plurality of printing configurations, the printing configurations may each have an associated submission queue that the user uses to submit the simplex print jobs to. To the user the different submission queues associated with the different printing configurations may appear as different virtual printers. An additional submission queue may be provided for submitting duplex print jobs (or at least for submitting print jobs that will be processed in duplex mode). In the case of automatic distribution, the physical printer may have one submission queue that is not tied to a single printing configuration. A job scheduler will than process the print jobs in the submission queue and assign them, based on the distribution algorithm to a plurality of (internal) printing queues, the printing queues each corresponding to a printing configuration. Furthermore, an additional (internal) printing queue may be present to process duplex print jobs according to a duplex print mode.

In some advantageous embodiments, all sub-jobs may be scheduled to a single output device. As soon as a raster image processor (RIP) has sufficient images ripped ahead (including the number of copies to print each job with) to fill the first output device, then images ripped after that can be scheduled towards a second output device. This gives then the double productivity in cases where enough images can be ripped ahead. This is also possible across different jobs.

In some advantageous embodiments, the printer comprises a stacker that is adapted to receive the print media, to stack a fraction of the received print media, and to pass through a remainder of the received print media to at least one further stacker of the printer. The rate (in sheets per minute) of the stacker for receiving print media may correspond to the rate (in images per minute) of the print engine. Said rate corresponds to the sum of the rate (in sheets per minute) of the stacker for stacking the fraction of the print media and the rate (in sheets per minute) of the stacker for passing through the remainder of the received print media.

In some advantageous embodiments, the printer comprises a stacker having a plurality of drawers, wherein each drawer corresponds to a separate output device.

In some advantageous embodiments, the printer comprises a plurality of stackers wherein each stacker of the plurality of stackers corresponds to at least one output device.

In some advantageous embodiments, the printer may additionally print a duplex print job using a printing configuration comprising one of the input devices, the print engine, and one of the output devices. Accordingly, there may be two modes of operation, a first conventional (unsplit) mode (primarily dealing with duplex jobs although simplex jobs can be processed as in the prior art) and a split mode (two or more printing configurations) for dealing with simplex jobs. The printer may dynamically switch between these two modes as determined by a scheduler that determines a schedule for printing the jobs. The scheduler will then take into account that while the printer is printing a duplex job, the virtual simplex printers (printing configurations) will be "busy", or at least not idle, as the print engine is processing the duplex job and jobs queued in the simplex queues (associated with the simplex printing configurations) have to wait until the print engine is available again. On the other hand, the virtual simplex printers can be operated in parallel, but if at least one of the virtual simplex printers is busy, the virtual duplex printer will also be "busy", or at least not idle, as the print engine is processing a simplex job. As an aside, note that a simplex print job may be printed in duplex mode wherein a sheet passes the print engine twice but is only printed upon once which is, for larger jobs, not the most productive scenario.

As compared to simply making the input or output devices faster, according to the invention no extra functionality (faster stacking) is needed that is not used when printing in the duplex mode. Trying to make faster input and output devices may also have a negative impact on other important aspects of the mechanism, e.g. cost or reliability. Moreover, significant effort and time may be necessary to develop the input or output devices. By using printing configurations in an interwoven way, these problems can be avoided.

### BRIEF DESCRIPTION OF THE DRAWINGS

The present invention will become more fully understood from the detailed description given hereinbelow and the accompanying schematic drawings which are given by way of illustration only, and thus are not limitative of the present invention, and wherein:
- Fig. 1: shows a schematic illustration of a printer operating in a duplex mode according to the prior art;
- Fig. 2: shows a schematic illustration of a printer operating in a simplex mode according to the prior art;
- Fig. 3: shows a schematic illustration of a printer according to an embodiment of the invention;
- Fig. 4: shows a schematic illustration of the distribution of a simplex print job to printing configurations and the subsequent printing process;
- Fig. 5: shows a flow diagram of a method for operating a printer according to an embodiment of the invention;
- Fig. 6: schematically illustrates a block diagram illustrating a computer program product according to an embodiment of the invention; and
- Fig. 7: schematically illustrates a block diagram illustrating a non-transitory, computer-readable storage medium according to an embodiment of the invention.

### DETAILED DESCRIPTION OF THE DRAWINGS

The present invention will now be described with reference to the accompanying drawings, wherein the same reference numerals have been used to identify the same or similar elements throughout the several views, and in some instances throughout the several embodiments.

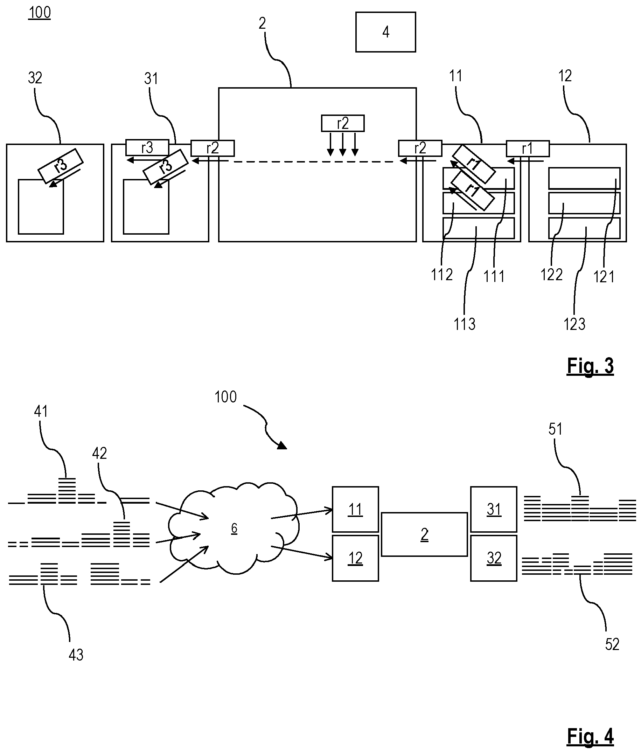

Figure 3 shows a printer 100 as well as a printer controller 4 for controlling the printer 100. The printer 100 comprises two paper input modules (PIM) 11, 12 with three drawers 111-113 and 121-123, respectively. Separate drawers 111-113, 121-123 of the same paper input module 11, 12 or of different paper input modules 11, 12 may provide print media to the print engine 2 at a rate r1 of 100 sheets per minute. Two feeding mechanisms can be used in an interwoven way such that a total rate r2 or 200 sheets per minute is achieved. Note that although the paper input modules 11, 12 may separate the sheets from the drawers 111-113, 121-123 at a rate r1 of 100 sheets per minute, the conveyance speed in the paper input modules 11, 12 is not necessarily limited to the separation rate of 100 sheets per minute. The paper input modules 11, 12 may be arranged such that the sheets are conveyed at a higher transport speed, for example a speed corresponding to a rate r2 of 200 sheets per minute.

The printer 100 further comprises a print engine 2 for disposing marking material on the print media supplied by the paper input modules 11, 12. The print engine 2 operates at a rate r2 of 200 images per minute (i.e. 200 sheets per minute in a simplex mode).

The printer 100 further comprises two stackers 31, 32 for stacking and holding the print media after the printing process, i.e. after the marking material has been disposed on the print media. The first stacker 31 receives the print media from the print engine 2 at the rate r2 of 200 sheets per minute and stacks half of the print media at a rate r3 of 100 sheets per minute. The second half of the print media is passed through to the second stacker 32 at a rate r3 of 100 sheets per minute. The second stacker 32 stacks the received sheets at a rate r3 of 100 sheets per minute.

The printer 100 further comprises a printer controller 4 which may be part of the printer 100. The printer controller 4 receives one or more simplex print jobs distributed to separate printing configurations. The printer controller 4 may also be configured to distribute sub-jobs of a print job to the printing configurations. Each printing configuration comprises one input device, the print engine 2 and one output device. Herein, an input device may comprise one of the paper input modules 11, 12. The input device may also comprise a drawer of the paper input module 11, 12 with a respective feeding mechanism providing print media to the print engine 2. An output device may comprise one of the stackers 31, 32.

Based on a control signal obtained by the printer controller 4, the printer 100 prints the simplex print jobs using the plurality of printing configurations in an interwoven way. For example, two printing configurations may be defined. The first printing configuration comprises a first drawer 111 of the first paper input module 11 for providing print media, the print engine 2 for printing, the first stacker 31 for putting through the print media, and the second stacker 32 for stacking the print media. The second printing configuration comprises a second drawer 112 of the first paper input module 11, the print engine 2 for printing and the first stacker 31 for stacking the print media. The two printing configurations are operated in an interwoven way. That is, after a sheet is processed using the first printing configuration, a further sheet is processed using the second printing configuration, and so on. That is, two input devices are interwoven to create a single stream of print media entering the print engine 2 comprising of sheets taken alternatingly from a first drawer 111 and a second drawer 112.

Depending on the type of supplied print media and the type of end product, further printing configurations may be defined which may be interwoven in a more complex way. The generation of the configurations and the distribution of the print jobs to the printing configurations may take into account that the unprinted print media on the input side is generally more generic and each piece of print media is generally interchangeable with another piece of the same type of print media. Because of this, the input devices may be filled with the same media, and they can together provide sheets to the engine. However, exceptions such as mixed media jobs, media with tabs, or sequential, preprinted media may also be taken into account.

Further, the stackers 31, 32 create stacks from printed sheets. Depending on the application, after it is printed, a printed sheet is unlikely to be interchangeable with another printed sheet. In fact, the order of the sheets, and the grouping of the job sets may be critical and may therefore be taken into account.

In general, it may occur that identical copies of the same sheet are required. In this case, half of the print media may be stacked in the first stacker 31 and half of the print media may be stacked in the second stacker 32.

However, it can also occur that (sub-)job A is to be printed a certain number of times, e.g. 5 times, consisting of 6 images, and (sub-)job B is to be printed a further number of times, e.g. 7 times, consisting of 3 images. In this case, the (sub-)jobs are divided in some way and the user is informed which stacker 31, 32 stores which of the print media according to the respective (sub-)job A, B.

Figure 4 shows a schematic illustration of the distribution of a print job to printing configurations and the subsequent printing process. In this case, three sub-jobs 41, 42, 43 are processed. The three sub-jobs are distributed in the distribution step 6 (e.g. by the printer controller 4) to different printing configurations. According to the distribution, the input devices 11, 12, the print engine 2 and the output devices 31 and 32 are operated to print and provide output in different stacks 51, 52 (within the output devices 31, 32).

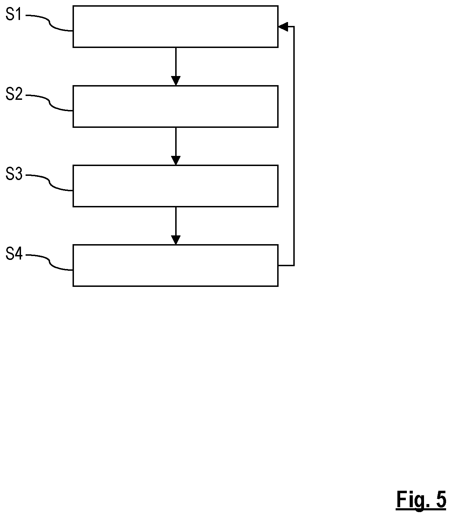

Figure 5 shows a flow diagram of a method for operating a printer 100. The printer 100 may be configured as described above. That is, the printer 100 comprises a plurality of input devices for providing print media, a print engine 2 for disposing marking material on the print media, and a plurality of output devices for holding the print media after the marking material has been disposed on the print media.

The print engine 2 disposes marking material on the print media at a rate (in images per minute) that is larger than a rate (in sheets per minute) provided by each input device of the plurality of input devices and/or each output device of the plurality of output devices.

As described above, the printer 100 may comprise paper input modules 11, 12 with a plurality of drawers 111-113, 121-123. Each drawer 111-113, 121-123 may correspond to a separate input device. Additionally or alternatively, each paper input module 11, 12 may correspond to a separate input device.

Further, the printer 100 may comprise a plurality of stackers 31, 32, possibly having a plurality of drawers. Each drawer may correspond to a separate output device. Additionally or alternatively, each stacker 31, 32 may correspond to a separate output device.

In a first step S1, a plurality of sub-jobs of a simplex print job is received.

In step S2, the sub-jobs are distributed to a plurality of different printing configurations. Each printing configuration comprises at least one of the input devices, the print engine 2, and at least one of the output devices. The distribution process may be carried out automatically. Alternatively, the user may distribute the sub-jobs to the respective printing configurations.

In step S3, the simplex print job (distributed to the printing configurations) is provided.

In step S4, the printer 100 prints the simplex print job using the plurality of printing configurations in an interwoven way. The method can then start again.

In addition to simplex jobs, the printer 100 may also print duplex jobs.

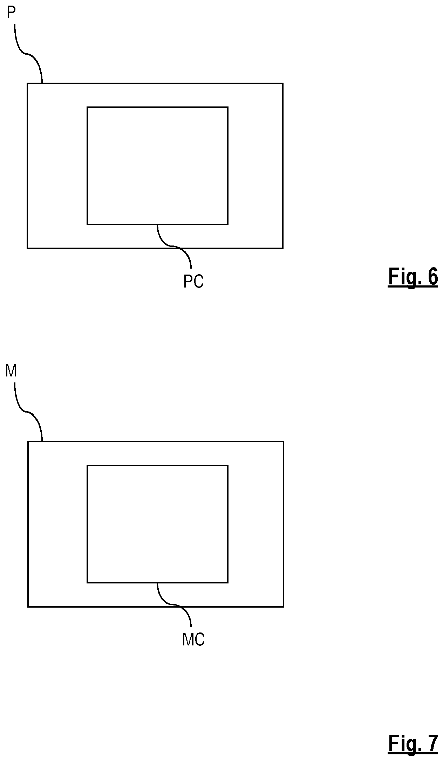

Figure 6 schematically illustrates a block diagram illustrating a computer program product P comprising executable program code PC. The executable program code PC is configured to perform, when executed, e.g. by a computing device (e.g. the printer controller 4), the method for operating a printer 100 according to the invention.

Figure 7 schematically illustrates a block diagram illustrating a non-transitory, computer-readable storage medium M comprising executable program code MC configured to, when executed, e.g. by a computing device (e.g. the printing controller), perform the method for operating a printer 100 according to the invention.

## Claims

1. A method for operating a printer (100), wherein the printer (100) comprises a plurality of input devices (11, 12) for providing print media, a print engine (2) for disposing marking material on the print media, and a plurality of output devices (31, 32) for holding the print media after the marking material has been disposed on the print media, the method comprising the following steps:
providing (S3) one or more simplex print jobs being distributed to a plurality of different printing configurations, wherein each printing configuration comprising:
at least one of the input devices (11, 12),
the print engine (2), and
at least one of the output devices (31, 32); and
printing (S4), by the printer (100), the simplex print jobs using the plurality of printing configurations in an interwoven way.

2. The method of claim 1,
wherein the print engine (2) disposes marking material on the print media at a rate (r2) of images per minute that is larger than at least one of:
a rate of sheets (r1) per minute provided by each input device (11, 12) of the plurality of input devices (11, 12), and
a rate of sheets (r3) per minute provided by each output device (31, 32) of the plurality of output devices (31, 32).

3. The method of claim 2,
wherein the rate (r1) of images per minute provided by the print engine (2) corresponds essentially to:
a combined rate of sheets per minute provided by the plurality of input devices (11, 12), and/or
a combined rate of sheets per minute provided by the plurality of output devices (31, 32).

4. The method of any of the preceding claims,
wherein the printer (100) comprises a paper input module (11, 12), having a plurality of drawers (111-113, 121-123), wherein each drawer (111-113, 121-123) corresponds to a separate input device (11, 12).

5. The method of any of the preceding claims,
wherein the printer (100) comprises a plurality of paper input modules (11, 12), wherein each paper input module (11, 12) of the plurality of paper input modules (11, 12) corresponds to at least one input device (11, 12).

6. The method of any of the preceding claims,
further comprising automatically distributing (S2) the simplex print jobs to the plurality of printing configurations, based on a distribution algorithm.

7. The method of claim 6, wherein the distribution algorithm distributes the simplex print jobs to the plurality of printing configurations in an essentially even way.

8. The method of any of the preceding claims, wherein the printer (100) comprises a stacker (31, 32) that is adapted to receive the print media, to stack a fraction of the received print media, and to pass through a remainder of the received print media to at least one further stacker (31, 32) of the printer (100).

9. The method of any of the preceding claims,
wherein the printer (100) comprises a stacker (31, 32), having a plurality of drawers, wherein each drawer corresponds to a separate output device (31, 32).

10. The method of any of the preceding claims,
wherein the printer (100) comprises a plurality of stackers (31, 32), wherein each stacker (31, 32) of the plurality of stackers (31, 32) corresponds to at least one output device (31, 32).

11. The method of any of the preceding claims, further comprising:
printing, by the printer (100), a duplex print job using a printing configuration comprising one of the input devices (11, 12), the print engine (2), and one of the output devices (31, 32).

12. A computer program product comprising executable program code configured to, when executed by a computing device, perform the method according to any of claims 1 to 11.

13. A non-transitory, computer-readable storage medium comprising executable program code configured to, when executed by a computing device, perform the method according to any of claims 1 to 11.

14. A printer controller (4) for controlling a printer (100), wherein the printer (100) comprises a plurality of input devices (11, 12) for providing print media, a print engine (2) for disposing marking material on the print media, and a plurality of output devices (31, 32) for holding the print media after the marking material has been disposed on the print media, wherein the printer controller (4) is adapted to:
receive one or more simplex print jobs being distributed to a plurality of different printing configurations, wherein each printing configuration comprising:
at least one of the input devices (11, 12),
the print engine (2), and
at least one of the output devices (31, 32); and
control the printer (100) to print the simplex print jobs using the plurality of printing configurations in an interwoven way.

15. A printer (100) comprising:
a plurality of input devices (11, 12) configured to provide print media,
a print engine (2) configured to dispose marking material on the print media,
a plurality of output devices (31, 32) configured to hold the print media after the marking material has been disposed on the print media, and
a printer controller (4) configured to control the printer (100) according to claim 14.
